# EUROPÄISCHE PATENTSCHRIFT

(11) **EP 3 803 179 B1**
(45) Veröffentlichungstag und Bekanntmachung des Hinweises auf die Patenterteilung: **12.04.2023**
(21) Anmeldenummer: 19723758.9
(22) Anmeldetag: 09.05.2019
(51) Int. Cl.: F16L 23/036, F16L 27/10, F16L 33/28, F16L 27/108, F16L 51/02

(54) **KOMPENSATORANORDNUNG FÜR TRANSPORTSYSTEME**
COMPENSATOR ARRANGEMENT FOR TRANSPORT SYSTEMS
ARRANGEMENT COMPENSATEUR POUR SYSTÈMES DE TRANSPORT

(30) Priorität: 29.05.2018 DE 102018208477
(43) Veröffentlichungstag der Anmeldung: 14.04.2021
(73) Patentinhaber: EagleBurgmann Germany GmbH & Co. KG, 82515 Wolfratshausen (DE)
(72) Erfinder: JØRGENSEN, Henrik, 6600 Vejen (DK)
(74) Vertreter: Hoefer & Partner Patentanwälte mbB
(86) Internationale Anmeldenummer: PCT/EP2019/061892
(87) Internationale Veröffentlichungsnummer: WO 2019/228774

(56) Entgegenhaltungen:
- DE-A1- 2 847 892
- DE-B3-102010 060 981
- DE-U1- 8 709 221
- GB-A- 795 786

## Beschreibung

Die Erfindung betrifft eine Kompensatoranordnung, insbesondere für Transportsysteme oder dgl., eingerichtet zur Verbindung zweier Elemente, um insbesondere Relativbewegungen zwischen den Rohrelementen auszugleichen.

Kompensatoranordnungen sind aus dem Stand der Technik in Transportsystemen in unterschiedlichen Ausgestaltungen bekannt. Kompensatoranordnungen stellen dabei eine flexible Verbindung zweier Rohrelemente oder dgl. bereit, um beispielsweise thermische Längenänderungen im Rohrsystem auszugleichen. Ferner können Schüttel- oder Rüttelbewegungen oder dgl. auf das gesamte Rohrsystem auftreten. Derartige Schüttel- oder Rüttelbewegungen treten beispielsweise in Transportsystemen von Lebensmitteln beim Wiegen und Abpacken von pulverförmigem Lebensmitteln wie Mehl, Milchpulver oder dgl. auf. Je nach Abmessung der Anlage können Kompensatoren hierbei Querschnitte von über einem Meter aufweisen. Ein Beispiel einer Kompensatoranordnung ist in der WO 2007/133094 A1 gezeigt, welche ein flexibles Rohr offenbart, bei dem ein Rohrendbereich radial nach Innen eindrückbar ist, um mit einem Anschlussrohr verbunden zu werden. Hierbei weist das flexible Rohr zwei umlaufende Wülste auf, welche eine Wulst des Anschlussrohrs im montierten Zustand zwischen sich aufnehmen. Diese Kompensatoranordnung ist zwar sehr schnell und einfach montierbar, jedoch können sich im Betrieb Dichtigkeitsprobleme, insbesondere bei pulsierenden Transportvorgängen ergeben.

Die DE 28 47 892 A1 zeigt eine Kompensatoranordnung mit einer ersten und einer zweiten Fixiereinheit und einem flexiblen Zwischenelement mit einem Hauptkörper, einem ersten radialen und einem zweiten radialen Endflansch. Die beiden Fixiereinheiten sind gleich aufgebaut und weisen ein Anschlusselement mit einem Verbindungskörper und einem Fixierflansch mit einer Durchgangsöffnung auf und einen Klemmring, der ebenfalls eine Durchgangsöffnung aufweist, welche mittels Schraubverbindungen miteinander verbunden sind, um das Zwischenelement zwischen sich zu klemmen.

Aus der DE 10 2010 060 981 B3 ist eine Rohrflanschverbindung bekannt, bei der zwei Rohrflansche mittels Schrauben miteinander verbunden sind. Zwischen den flanschartigen Enden der Rohrflansche ist eine Dichtringanordnung mit einem Stützring und einem Dichtabschnitt angeordnet. Die beiden Flansche werden dabei mittels der Schrauben und metallischer Ringe gegeneinander gedrückt.

Es ist daher Aufgabe der vorliegenden Erfindung, eine Kompensatoranordnung bereitzustellen, welche bei einfachem Aufbau und kostengünstiger Herstellbarkeit eine schnelle Montage bei gleichzeitig höchster Dichtheit bereitstellt.

Diese Aufgabe wird durch eine Kompensatoranordnung mit den Merkmalen des Anspruchs 1 gelöst, die Unteransprüche zeigen bevorzugte Weiterbildungen der Erfindung.

Die erfindungsgemäße Kompensatoranordnung mit den Merkmalen des Anspruchs 1 weist den Vorteil auf, dass eine flexible Verbindung zweier Rohrelemente oder dgl. möglich ist. Es wird eine höchste Dichtheit im Bereich der Kompensatoranordnung erreicht. Ferner kann die Kompensatoranordnung eine hohe Lebensdauer aufweisen. Darüber hinaus ist ein schneller Austausch eines flexiblen Zwischenelements möglich. Dies wird erfindungsgemäß dadurch erreicht, dass die Kompensatoranordnung eine erste und eine zweite Fixiereinheit umfasst, wobei zwischen der ersten und zweiten Fixiereinheit in demontierbarer Weise ein flexibles Zwischenelement angeordnet ist. Das Zwischenelement weist einen Hauptkörper und einen ersten und zweiten radialen Endflansch auf, welche an einander gegenüberliegenden Enden des Hauptkörpers angeordnet sind. Dabei umfasst die erste Fixiereinheit ein erstes Anschlusselement mit einem ersten Verbindungskörper und einem ersten Fixierflansch mit einer Vielzahl von Durchgangsöffnungen, einen ersten Gegenring und einen ersten Klemmring sowie eine Klemmeinrichtung, um den ersten radialen Endflansch des flexiblen Zwischenelements lösbar zu klemmen. Die erste Klemmeinrichtung umfasst Bolzen und längliche Ausnehmungen zur Aufnahme der Bolzen. Weiterhin umfasst die zweite Fixiereinheit ein zweites Anschlusselement mit einem zweiten Verbindungskörper und einem zweiten Fixierflansch mit einer Vielzahl von Durchgangsöffnungen, einen zweiten Gegenring, einen zweiten Klemmring und eine zweite Klemmeinrichtung. Die zweite Klemmeinrichtung klemmt dabei den zweiten radialen Endflansch des flexiblen Zwischenelements lösbar, wobei die zweite Klemmeinrichtung ebenfalls Bolzen und längliche Ausnehmungen zur Aufnahme der Bolzen umfasst. Weiterhin ist der erste Endflansch des flexiblen Zwischenelements zwischen dem ersten Fixierflansch des ersten Anschlusselements und dem ersten Gegenring fluiddicht geklemmt. Der zweite Endflansch des flexiblen Zwischenelements ist zwischen dem zweiten Fixierflansch des zweiten Anschlusselements und dem zweiten Gegenring fluiddicht geklemmt. Das flexible Zwischenelement umfasst einen schlauchartigen Hauptkörper mit dem ersten und zweiten Endflansch, welche am Hauptkörper in radialer Richtung vorstehen. Die Bolzen sind dabei durch die Durchgangsöffnungen des ersten bzw. zweiten Fixierflansches hindurch geführt. Somit kann eine Kompensationsanordnung bereitgestellt werden, welche höchste Fluiddichtigkeit aufweist. Dabei kann jedoch eine einfach und schnelle Montage und auch Demontage ermöglicht werden, um gegebenenfalls einen Austausch des flexiblen Zwischenelements bei Beschädigung oder dgl. zu ermöglichen. Weiter weisen die länglichen Ausnehmungen eine zu einer Radialebene geneigte Rampe auf.

Weiter bevorzugt umfassen die Bolzen der Klemmeinrichtung einen Kopf, insbesondere einen Kugelkopf.

Die Bolzen sind vorzugsweise am Gegenring fixiert und die länglichen Ausnehmungen sind am Klemmring angeordnet. Es sei jedoch angemerkt, dass es auch möglich ist, dass die Bolzen am Klemmring vorgesehen sind und die länglichen Ausnehmungen am Gegenring vorgesehen sind.

Die Bolzen sind besonders bevorzugt als Schraubbolzen ausgeführt. Vorzugsweise sind die Bolzen dabei in den Gegenring eingeschraubt.

Das flexible Zwischenelement ist vorzugsweise ein Schlauch und aus einem flexiblen Kunststoffmaterial hergestellt. Besonders bevorzugt ist das Kunststoffmaterial durchsichtig. Hierdurch weist die Kompensatoranordnung neben der Ausgleichsfunktion noch eine Überwachungsfunktion auf, da durch den durchsichtigen flexiblen Kunststoff das im Inneren des Kompensators geförderte Produkt sichtbar ist.

Ein Klemmen der Klemmeinrichtung wird durch Einstecken der Köpfe der Bolzen in die länglichen Ausnehmungen und eine anschließende Relativbewegung zwischen dem Bolzen und dem Klemmring erreicht, wobei eine axiale Klemmkraft auf die beiden Endflansche des flexiblen Zwischenelements ausgeübt wird. Hierbei kann zum Klemmen eine Verdrehung oder eine Linearverschiebung ausgeübt werden.

Weiter bevorzugt sind die länglichen Ausnehmungen bogenförmig, wodurch durch eine Relativverdrehung zwischen dem Gegenring und dem ersten Klemmring sowie dem zweiten Gegenring und dem zweiten Klemmring eine Verklemmung des flexiblen Zwischenelements zwischen den Gegenringen und den Anschlusselementen erfolgt. Alternativ sind die länglichen Ausnehmungen lineare Längsausnehmungen, so dass zum Klemmen eine lineare Relativbewegung zwischen Gegenring und Klemmring ausgeführt wird.

Die länglichen Ausnehmungen sind dabei vorzugsweise derart ausgebildet, dass sie eine längliche Durchgangsöffnung ausbilden, wobei zwei geneigte Rampen an den seitlichen Wandbereichen der länglichen Durchgangsöffnung verlaufen, um das Klemmen in Axialrichtung der Kompensatoranordnung zu ermöglichen.

Weiter bevorzugt umfasst die Kompensatoranordnung eine Anzeigeeinrichtung zur Bestimmung einer Endposition der montierten Kompensatoranordnung. Die Anzeigeeinrichtung kann beispielsweise durch zusätzliche Anzeigelöcher ausgebildet sein, durch welche hindurch eine Markierung ersichtlich ist, wenn die bei der Klemmung durch die Relativbewegung zwischen dem Gegenring und dem Klemmring ausgeführte Lageänderung die richtige Position erreicht. Insbesondere kann hierdurch auch sichergestellt werden, dass eine vordefinierte Klemmkraft zwischen den Bauteilen erreicht wird, um eine ausreichende und dauerhafte Abdichtung der Kompensatoranordnung zu erreichen.

Weiter bevorzugt weist das erste und zweite Anschlusselement jeweils an einer Innenseite des Fixierflansches einen in Axialrichtung vorstehenden und um den Umfang umlaufenden Axialvorsprung auf. Der erste und zweite Endflansch des flexiblen Zwischenelements ist dabei zwischen dem Axialvorsprung und einer inneren Umfangskante des Gegenrings geklemmt. Hierdurch wird eine besonders sichere Abdichtung erreicht, da das Material des flexiblen Zwischenelements in diesem Bereich durch eine Linienpressung abgedichtet werden kann.

Es sei angemerkt, dass die Kompensatoranordnung in geometrisch unterschiedlichen Formen vorgesehen sein kann. Einerseits können die Bauteile der Kompensatorvorrichtung, insbesondere der erste und/oder zweite Verbindungskörper, jeweils im Wesentlichen zylindrisch bzw. ringförmig gebildet sein und somit einen kreisförmigen Innendurchmesser aufweisen oder alternativ einen inneren mehreckigen Querschnitt, insbesondere einen viereckigen Querschnitt, aufweisen. Es ist weiter möglich, dass durch die Kompensatoranordnung beispielsweise auch ein kreisförmiger Querschnitt auf einen mehreckigen Querschnitt übergeht oder anders herum. Somit kann die Kompensatoranordnung auch noch eine Adapterfunktion bei der Verbindung von Bauteilen übernehmen. Vorteilhafterweise ist der erste Verbindungskörper des ersten Anschlusselements zylindrisch und der zweite Verbindungskörper des zweiten Anschlusselements ist rechteckig.

Um eine gleichmäßig verteilte Klemmkraft entlang des Umfangs zu erreichen, sind die länglichen Ausnehmungen der Klemmeinrichtung und die Bolzen gleichmäßig entlang des Umfangs verteilt.

Ferner betrifft die vorliegende Erfindung ein Transportsystem mit einer erfindungsgemäßen Kompensatoranordnung. Die Kompensatoranordnung ist zwischen einem ersten und zweiten Rohrelement des Transportsystems angeordnet und gleicht temperaturbedingten Längenänderung und auch Relativbewegungen zwischen den Rohrelementen aus. Eine Verbindung des Kompensatoranordnung zu den Rohrelementen kann dabei beispielsweise mittels einer Schweißverbindung am ersten und zweiten Anschlusselement der Kompensatoranordnung erfolgen.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische, perspektivische Ansicht einer Kompensatoranordnung gemäß einem Ausführungsbeispiel der Erfindung,
- Fig. 2: eine schematische Schnittansicht der Kompensatoranordnung von Fig. 1,
- Fig. 3: eine schematische, perspektivische Ansicht eines Gegenrings der Kompensatoranordnung von Fig. 1,
- Fig. 4: eine schematische Seitenansicht eines Bolzens einer Klemmeinrichtung der Kompensatoranordnung von Fig. 1,
- Fig. 5: eine vergrößerte, schematische Teilschnittansicht der Kompensatoranordnung von Fig. 1,
- Fig. 6: eine schematische, perspektivische Ansicht eines Klemmrings der Kompensatoranordnung von Fig. 1,
- Fig. 7 bis 9: verschiedene Ansichten einer Bolzenaufnahmeöffnung des Klemmrings von Fig. 6,
- Fig. 10: eine schematische Ansicht einer Klemmeinrichtung der Kompensatoranordnung im geklemmten Zustand,
- Fig. 11: eine schematische, perspektivische Ansicht eines Anschlusselements der Kompensatoranordnung von Fig. 1, und
- Fig. 12: eine schematische Darstellung eines Klemmrings gemäß einem zweiten Ausführungsbeispiel der Erfindung.

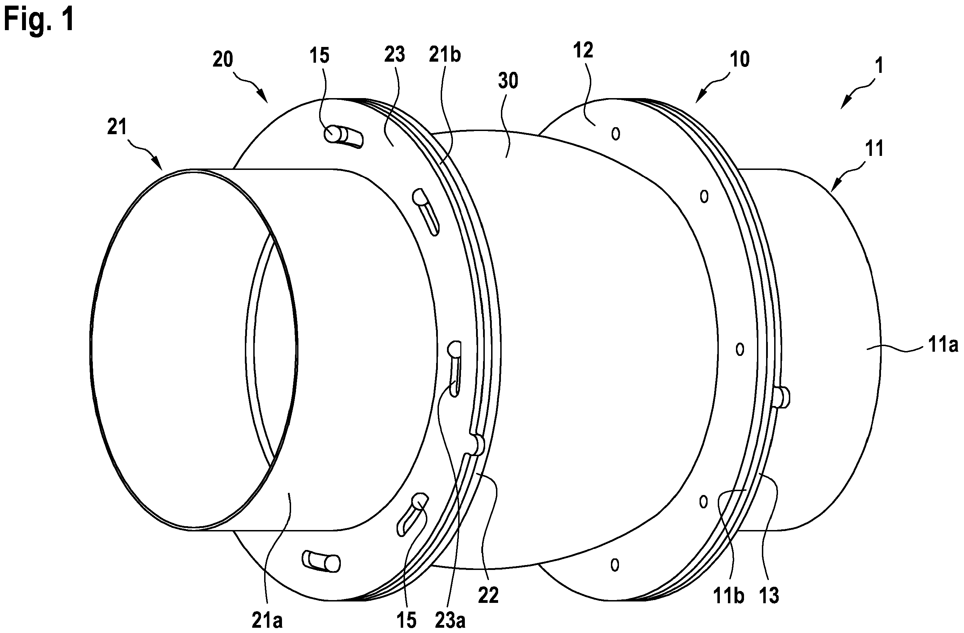

Nachfolgend wird unter Bezugnahme auf die Fig. 1 bis 11 eine Kompensatoranordnung 1 gemäß einem bevorzugten Ausführungsbeispiel der Erfindung im Detail beschrieben.

Die Kompensatoranordnung 1 ist zur Verbindung zwischen einem ersten und einem zweiten Rohrelement 2, 2' eines Transportsystems eingerichtet. Vorzugsweise wird das Transportsystem in der Nahrungsmittelindustrie verwendet, um pulverförmige oder körnige Stoffe, wie beispielsweise Milchpulver oder Getreide oder dgl. zu fördern.

Die Kompensatoranordnung 1 hat dabei eine Ausgleichsfunktion zwischen den Rohrelementen 2, 2` des Transportsystems, da beispielsweise bedingt durch Temperaturänderungen Längenänderungen der Bauteile auftreten können, was durch die Kompensatoranordnung ausgeglichen wird. Ferner dient die Kompensatoranordnung 1 auch zur Schwingungs-Entkoppelung von Rohrelementen, beispielsweise, wenn ein Rohrelement zu einem Füll- und Wiegeplatz führt, bei dem das transportierte Gut einer Verpackung zugeführt wurde und vor dem Wiegen gerüttelt wird, um eine homogene Befüllung der Verpackung zu ermöglichen. Dabei gleicht die Kompensatoranordnung 1 die Rüttelbewegungen, welche auch auf ein Rohrelement übertragen werden können, aus, und verhindert die weitere Übertragung in die restlichen Rohrsysteme des Transportsystems.

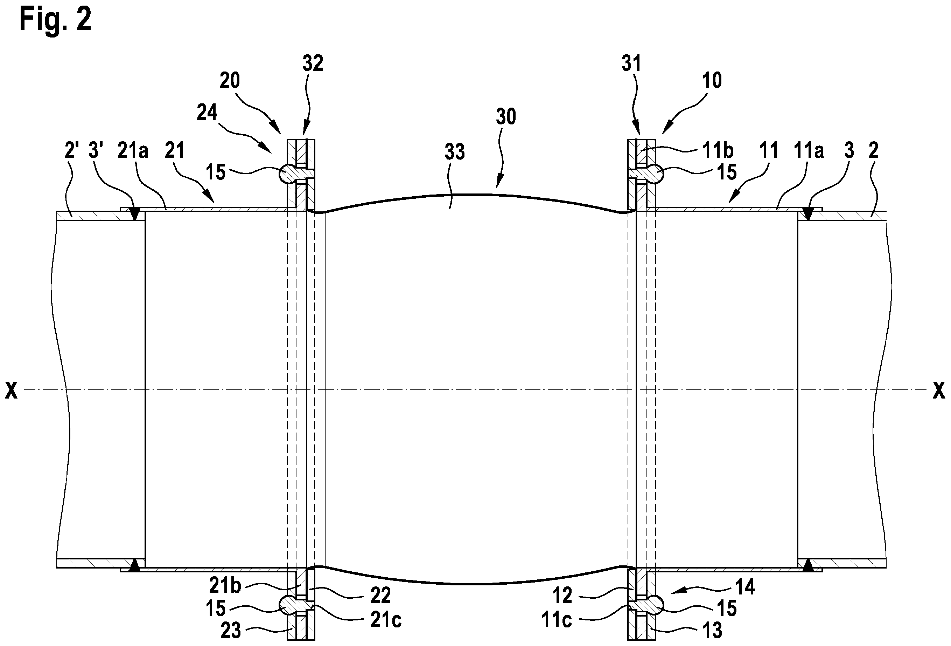

Wie aus den Fig. 1 und 2 ersichtlich ist, umfasst die Kompensatoranordnung 1 eine erste Fixiereinheit 10 und eine zweite Fixiereinheit 20 sowie ein flexibles Zwischenelement 30 mit einem flexiblen Hauptkörper 33, einem ersten Endflansch 31 und einem zweiten Endflansch 32. Die erste und zweite Fixiereinheit verbinden das Zwischenelement 30 mit den Rohrelementen 2, 2`.

Der erste Endflansch 31 und der zweite Endflansch 32 sind dabei an einem ersten und zweiten Ende des Hauptkörpers 33 jeweils radial nach außen vorstehend ausgebildet, so dass die beiden Endflansche 31, 32 in Form eines radial nach außen vorstehenden Ringes einteilig mit dem Hauptkörper 33 gebildet sind. Das flexible Zwischenelement 30 ist vorzugsweise aus einem flexiblen, insbesondere durchsichtigen, Kunststoffmaterial hergestellt.

Wie aus den Fig. 1 und 2 deutlich wird, sind die erste Fixiereinheit 1 und die zweite Fixiereinheit 2 identisch aufgebaut, jedoch spiegelverkehrt angeordnet.

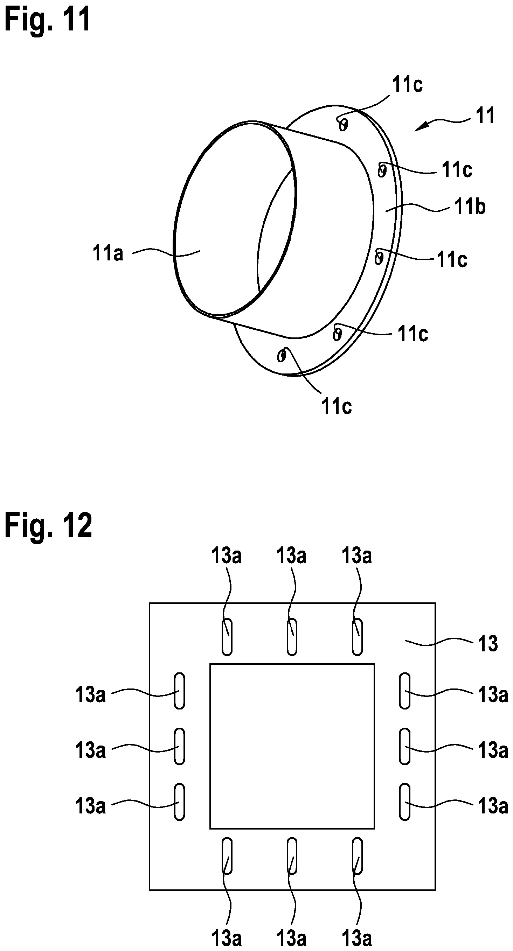

Dabei umfasst die erste Fixiereinheit 10 ein erstes Anschlusselement 11 mit einem ersten rohrförmigen Verbindungskörper 11a, einem radial nach außen gerichteten Fixierflansch 11b und Durchgangsöffnungen 11c im Fixierflansch 11b. Das erste Anschlusselement 11 ist schematisch in Fig. 11 dargestellt.

Wie weiter schematisch in Fig. 2 gezeigt, ist dabei der erste Verbindungskörper 11a mittels einer ersten Schweißverbindung 3 mit einem ersten Rohrelement 2 verbunden.

Weiterhin umfasst die erste Fixiereinheit 10 einen ersten Gegenring 12, einen ersten Klemmring 13 sowie eine erste Klemmeinrichtung 14.

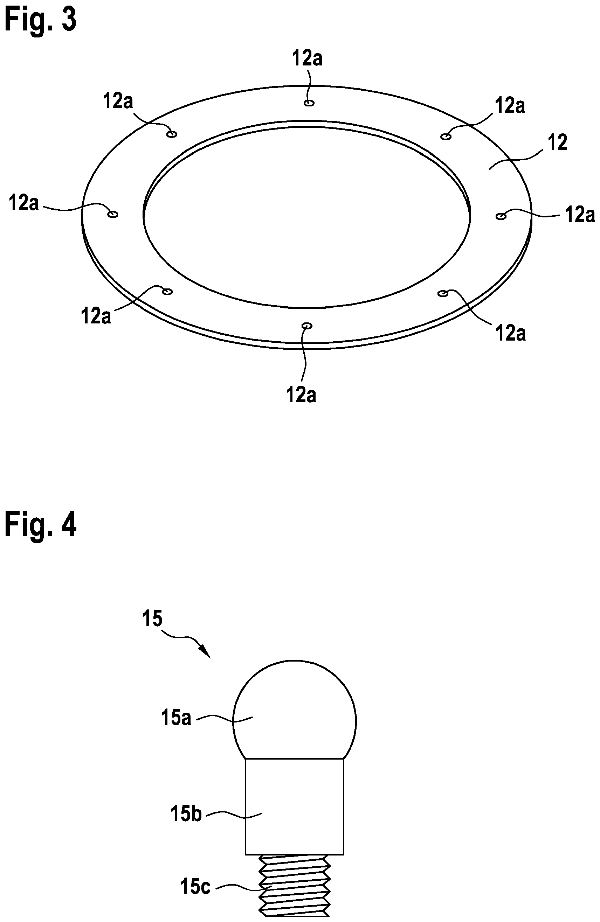

Der erste Gegenring 12 ist im Detail aus Fig. 3 ersichtlich. Wie gezeigt, weist der erste Gegenring 12 eine Vielzahl von Gewindebohrungen 12a auf, welche auf einer mittigen Umfangslinie auf dem ersten Gegenring 12 ausgebildet sind und in Umfangsrichtung jeweils gleich voneinander beabstandet sind. In die Gewindebohrungen 12a werden Bolzen 15 der ersten Klemmeinrichtung 14 eingeschraubt.

Ein Bolzen 15 ist im Detail in Fig. 4 dargestellt. Der Bolzen 15 umfasst einen kugelförmigen Kopf 15a, einen Körper 15b und ein Gewinde 15c zur Fixierung am ersten Gegenring 12. Alle Bolzen 15 sind dabei gleich ausgebildet.

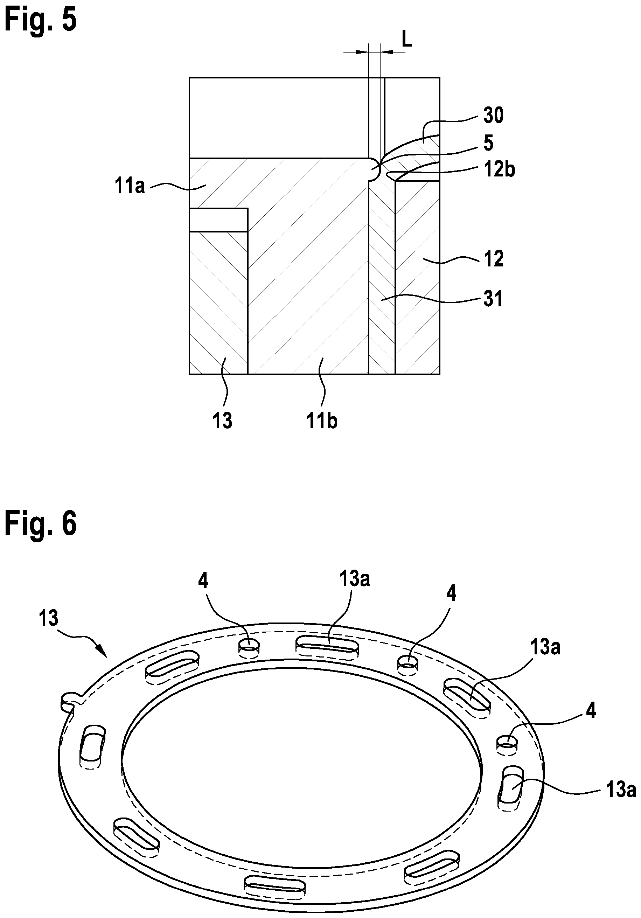

Die Fig. 6 bis 10 zeigen im Detail einen ersten Klemmring 13 der ersten Fixiereinheit 10. Wie insbesondere aus Fig. 6 ersichtlich ist, weist der erste Klemmring 13 eine Vielzahl von länglichen Ausnehmungen 13a auf. Die länglichen Ausnehmungen 13a sind ebenfalls in Umfangsrichtung jeweils mit gleichen Abständen voneinander benachbart abgeordnet. Die länglichen Ausnehmungen 13a sind bogenförmig ausgeführt. Die länglichen Ausnehmungen 13a bilden hierbei einen Teil der ersten Klemmeinrichtung 14.

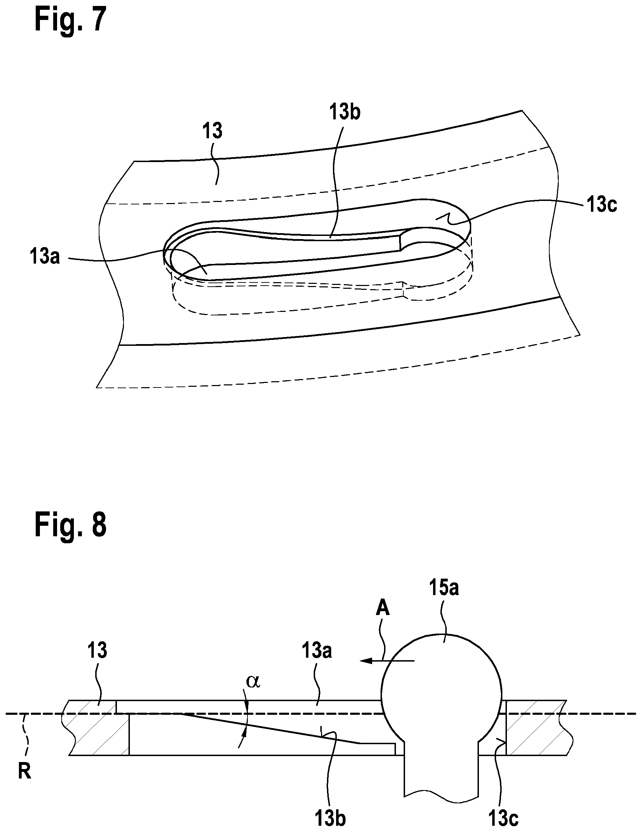

Wie im Detail aus den Fig. 7, 8 und 9 ersichtlich ist, sind die länglichen Ausnehmungen 13a derart ausgebildet, dass am Rand der Ausnehmung 13a zwei Rampen 13b ausgebildet sind. Die Rampen 13b sind zu einer Radialebene R, senkrecht zur Axialrichtung X-X, des Klemmrings in einem spitzen Winkel α geneigt (s. Fig. 8) und dienen dabei zur Führung des Kopfes 15a des Bolzens 15 der Klemmeinrichtung 14. So wird der Kopf 15a des Bolzens 15 in den rampenfreien Bereich in eine Durchstecköffnung 13c eingeführt und dann in Richtung der länglichen Ausnehmung geführt, bis ein Kontakt mit den Rampen 13b hergestellt wird. Hierbei wird der Kopf 15a des Bolzens durch eine Relativverdrehung zwischen dem ersten Gegenring 12, an dem der Bolzen befestigt ist, und dem ersten Klemmring 13 auf die Rampen 13b aufgeschoben.

In Fig. 8 ist der in die längliche Ausnehmung 13a eingeführte Kopf 15a des Bolzens 15 im noch nicht geklemmten Zustand schematisch dargestellt. Durch die Relativverdrehung zwischen dem ersten Gegenring 12 und dem ersten Klemmring 13 erfolgt eine Axialbewegung des ersten Gegenrings 12 in Richtung auf den ersten Klemmring 13 zu, wobei die zwischen dem ersten Gegenring 12 und dem ersten Klemmring 13 angeordneten ersten Endflansch 31 und ersten Fixierflansch 11b geklemmt werden.

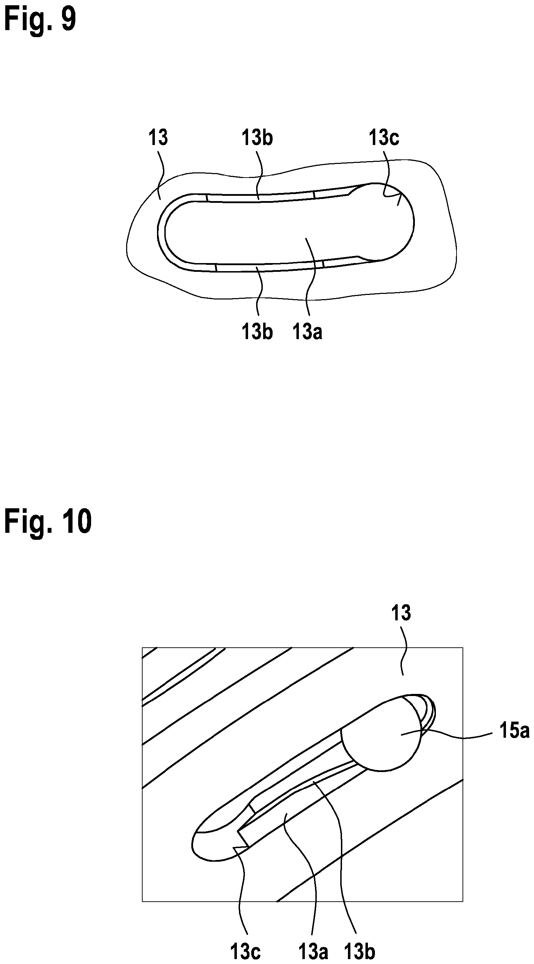

Ein geklemmter Bolzen 15 in der länglichen Ausnehmung 13a ist im Detail aus Fig. 10 ersichtlich. Dieser Klemmzustand wird erreicht, wenn, wie in Fig. 8 angedeutet, der Bolzenkopf 15a in Richtung des Pfeils A entlang der länglichen Ausnehmung 13a bewegt wird, oder der Klemmring 13 relativ zum Bolzen 15 bewegt wird. Hierzu kann am Klemmring 13 ein oder mehrere radial nach aussen vorstehende Vorsprünge oder eine oder mehrere Ausnehmungen zum Ansetzen eines Werkzeuges vorgesehen sein.

Wie weiterhin aus Fig. 5 ersichtlich ist, weist das erste Anschlagelement 11 einen umlaufenden Axialvorsprung 5 auf, welcher in Axialrichtung X-X der Kompensatoranordnung vorsteht. Der Axialvorsprung 5 ist an einer Innenseite des ersten Fixierflansches 11b ausgebildet. Wie aus Fig. 5 ersichtlich ist, welche den montierten Zustand der Kompensatoranordnung zeigt, ermöglicht der Axialvorsprung 5 ein verstärktes Klemmen des flexiblen Zwischenelements 30 zwischen dem Axialvorsprung 5 und einer inneren Kante 12b des ersten Gegenrings 12. Hierbei ist eine Dicke des flexiblen Zwischenelements 30 um die axiale Länge L des Axialvorsprungs 5 reduziert, so dass hier größere Klemmkräfte auf das flexible Zwischenelement 30 wirken und eine weiter verbesserte Abdichtung der Kompensatoranordnung 1 sichergestellt ist. Ein derartiger Axialvorsprung ist auch bei der zweiten Fixiereinheit 20 vorgesehen sein.

Wie insbesondere aus Fig. 2 ersichtlich ist, ist die zweite Fixiereinheit 20 identisch zur ersten Fixiereinheit 10 ausgebildet. Dabei umfasst die zweite Fixiereinheit 20 ein zweites Anschlagelement 21, einen zweiten Gegenring 22, einen zweiten Klemmring 23 und eine zweite Klemmeinrichtung 24. Das zweite Anschlusselement 21 umfasst einen zweiten Verbindungskörper 21a, einen zweiten Fixierflansch 21b und Durchgangsöffnungen 21c, durch welche die Bolzen 15 der zweiten Klemmeinrichtung 24 hindurchgeführt sind. Die Bolzen 15 sind im zweiten Gegenring 22 eingeschraubt. Die zweite Klemmeinrichtung 24 entspricht der ersten Klemmeinrichtung, so dass der zweite Fixierflansch 21b und der zweite Endflansch 32 des flexiblen Zwischenelements 30 zwischen zweitem Gegenring 22 und dem zweiten Klemmring 23 eingeklemmt ist. Wie aus Fig. 2 ersichtlich ist, ist der folienartige zweite Endflansch 32 dabei zwischen dem zweiten Fixierflansch 21b und dem zweiten Gegenring 22 eingeklemmt. Es sei angemerkt, dass der Klemmvorgang bei der zweiten Klemmeinrichtung 24 in gleicher Weise wie bei der ersten Klemmeinrichtung 14 erfolgt.

Der zweite Verbindungskörper 21a ist dabei mittels einer zweiten Schweißnaht 3' mit dem zweiten Rohrelement 2' verbunden.

Es sei angemerkt, dass der zweite Gegenring 22 und der zweite Klemmring 23 das zweite Anschlusselement 21 identisch zum ersten Anschlusselement 11, dem ersten Gegenring 12 und dem ersten Klemmring 13 ausgebildet sind, so dass diese nicht mehr im Detail dargestellt sind. Auch die Klemmeinrichtungen des ersten und zweiten Fixierelements 10, 20 sind identisch.

Somit kann erfindungsgemäß eine Kompensatoranordnung 1 bereitgestellt werden, welche eine sichere Abdichtung durch einen Klemmvorgang ermöglicht. Hierbei werden die Bolzen 15 der Klemmeinrichtungen durch die Durchgangsöffnungen 11c, 21c in die länglichen Ausnehmungen 13a eingesteckt und durch ein Verdrehen zwischen Gegenring und Klemmring erfolgt die Klemmung des flexiblen Zwischenelements 30 am Bereich der Endflansche 31, 32.

Um hierbei sicherzustellen, dass die richtige Klemmkraft aufgewandt wurde, sind, wie in Fig. 6 gezeigt, an den Klemmringen 13 bzw. 23 Anzeigeeinrichtungen 4 in Form von Durchgangslöchern vorgesehen. Hierbei sind, wie in Fig. 6 gezeigt, drei Positionen dargestellt. Beim Relativverdrehen zwischen dem Klemmring 13 und dem Gegenring 12 werden auch die Anzeigeeinrichtungen 4 mitverdreht, so dass bei Erreichen von vorbestimmten Markierungen auf dem Fixierflansch 11b des ersten Anschlusselements 11 eine in Abhängigkeit einer Dicke des flexiblen Zwischenelements 30 vorgegebenen Klemmkraft erreicht ist. Dabei können beispielsweise farbige Markierungen auf dem Fixierflansch 11b angebracht werden, welche dann jeweils durch die Anzeigeeinrichtungen sichtbar werden.

Somit kann erfindungsgemäß eine Kompensatoranordnung 1 bereitgestellt werden, welche schnell und kostengünstig montierbar ist. Ferner kann die Kompensatoranordnung auch schnell und einfach demontiert werden, falls beispielswiese eine Beschädigung des flexiblen Zwischenelements 30 vorliegt. Dann kann dieses einfach durch ein neues flexibles Zwischenelement 30 ausgetauscht werden. Hierzu müssen lediglich die beiden Fixiereinheiten 10, 20 gelöst werden und das flexible Zwischenelement ausgetauscht werden.

Fig. 12 zeigt einen Klemmring 13 gemäß einem zweiten Ausführungsbeispiel der Erfindung. Der Klemmring 13 des zweiten Ausführungsbeispiels weist statt bogenförmigen länglichen Ausnehmungen lineare längliche Ausnehmungen 13a auf. Somit erfolgt ein Klemmen nicht durch eine Relativverdrehung zwischen Gegenring und Klemmring wie beim ersten Ausführungsbeispiel, sondern durch eine Linearbewegung zwischen Gegenring und Klemmring. Weiterhin weist die Kompensatoranordnung des zweiten Ausführungsbeispiels einen viereckigen inneren Querschnitt auf, wie aus Fig. 12 deutlich ist.

Die länglichen Ausnehmungen 13a weisen wie im ersten Ausführungsbeispiel geneigte Rampen auf, welche aus Übersichtlichkeitsgründen in Fig. 12 nicht gezeigt sind. Ansonsten entspricht dieses Ausführungsbeispiel dem ersten Ausführungsbeispiel, so dass auf die dort gegebene Beschreibung verwiesen werden kann.

### Bezugszeichenliste

- 1: Kompensatoranordnung
- 2: erstes Rohrelement
- 2`: zweites Rohrelement
- 3: erste Schweißnaht
- 3': zweite Schweißnaht
- 4: Anzeigeeinrichtung
- 5: Axialvorsprung
- 10: erste Fixiereinheit
- 11: erstes Anschlusselement
- 11a: erster Verbindungskörper
- 11b: erster Fixierflansch
- 11c: Durchgangsöffnungen
- 12: erster Gegenring
- 12a: Gewindebohrungen
- 12b: innere Kante des ersten Gegenrings
- 13: erster Klemmring
- 13a: längliche Ausnehmung
- 13b: Rampe
- 13c: Durchstecköffnung
- 14: erste Klemmeinrichtung
- 15: Bolzen
- 15a: Kopf
- 15b: Körper
- 15c: Gewinde
- 20: zweite Fixiereinheit
- 21: zweites Anschlusselement
- 21a: zweiter Verbindungskörper
- 21b: zweiter Fixierflansch
- 21c: Durchgangsöffnungen
- 22: zweiter Gegenring
- 23: zweiter Klemmring
- 23a: längliche Ausnehmung
- 24: zweite Klemmeinrichtung
- 30: flexibles Zwischenelement
- 31: erster Endflansch
- 32: zweiter Endflansch
- 33: flexibler Hauptkörper
- A: Bewegungsrichtung des Bolzens zum Klemmen
- L: Länge des Axialvorsprungs
- R: Radialebene
- X-X: Axialrichtung
- α: Neigung der Rampe

## Patentansprüche

1. Kompensatoranordnung, umfassend:
- eine erste Fixiereinheit (10),
- eine zweite Fixiereinheit (20), und
- ein zwischen der ersten Fixiereinheit (10) und der zweiten Fixiereinheit (20) demontierbar angeordnetes flexibles Zwischenelement (30) mit einem Hauptkörper (33), einem ersten radialen Endflansch (31) und einem zweiten radialen Endflansch (32),
- wobei die erste Fixiereinheit (10) ein erstes Anschlusselement (11) mit einem ersten Verbindungskörper (11a) und einem ersten Fixierflansch (11b) mit einer Vielzahl von Durchgangsöffnungen (11c), einen ersten Gegenring (12), einen ersten Klemmring (13) und eine erste Klemmeinrichtung (14) umfasst, um den ersten radialen Endflansch (31) lösbar zu klemmen, wobei die erste Klemmeinrichtung (14) Bolzen (15) und längliche Ausnehmungen (13a) zur Aufnahme der Bolzen umfasst,
- wobei die zweite Fixiereinheit (20) ein zweites Anschlusselement (21) mit einem Verbindungskörper (21a) und einem zweiten Fixierflansch (21b) mit einer Vielzahl von Durchgangsöffnungen (21c), einen zweiten Gegenring (22), einen zweiten Klemmring (23) und eine zweite Klemmeinrichtung (24) umfasst, um den zweiten radialen Endflansch (32) lösbar zu klemmen, wobei die zweite Klemmeinrichtung (24) Bolzen (15) und längliche Ausnehmungen zur Aufnahme der Bolzen umfasst,
- wobei der erste Endflansch (31) des flexiblen Zwischenelements (30) zwischen dem ersten Fixierflansch (11b) des ersten Anschlusselements (11) und dem ersten Gegenring (12) fluiddicht geklemmt ist,
- wobei der zweiten Endflansch (32) des flexiblen Zwischenelements (30) zwischen dem zweiten Fixierflansch (21b) des zweiten Anschlusselements (21) und dem zweiten Gegenring (22) fluiddicht geklemmt ist, und
- wobei die länglichen Ausnehmungen (13a) Rampen (13b) aufweisen, welche zu einer Radialebene geneigt sind.

2. Kompensatoranordnung nach Anspruch 1, wobei die Bolzen (15) einen Kopf (15a) aufweisen.

3. Kompensatoranordnung nach einem der vorhergehenden Ansprüche, wobei das flexible Zwischenelement (30) aus einem flexiblen Kunststoffmaterial hergestellt ist.

4. Kompensatoranordnung nach einem der vorhergehenden Ansprüche, wobei die Bolzen (15) am ersten Gegenring (12) und am zweiten Gegenring (22) angeordnet sind.

5. Kompensatoranordnung nach einem der vorhergehenden Ansprüche, wobei die Bolzen (15) Schraubbolzen mit einem Gewinde (15c) sind.

6. Kompensatoranordnung nach Anspruch 1, wobei die Rampen (13b) seitlich an der länglichen Ausnehmungen (13a) angeordnet sind.

7. Kompensatoranordnung nach einem der vorhergehenden Ansprüche, wobei die länglichen Ausnehmungen (13a) bogenförmig oder geradlinig sind.

8. Kompensatoranordnung nach einem der vorhergehenden Ansprüche, ferner umfassend eine Anzeigeeinrichtung (4) zur Bestimmung einer vorbestimmten Endposition der ersten und zweiten Fixiereinheit (10, 20) im montierten Zustand.

9. Kompensatoranordnung nach einem der vorhergehenden Ansprüche, wobei das erste Anschlusselement (11) an einer Innenseite des Fixierflansches (11b) einen in Axialrichtung (X-X) vorstehenden, umlaufenden Axialvorsprung (5) aufweist, wobei das flexible Zwischenelement (30) im montierten Zustand zwischen dem Axialvorsprung (5) und einer inneren Kante (12b) des ersten Gegenrings (12) geklemmt ist.

10. Kompensatoranordnung nach einem der vorhergehenden Ansprüche, wobei der erste und/oder zweite Verbindungskörper (11a, 21a) einen zylinderförmigen Querschnitt oder einen mehreckigen, insbesondere viereckigen, Querschnitt aufweist.

## Claims

1. A compensator arrangement comprising:
- a first fixing unit (10),
- a second fixing unit (20), and
- a flexible intermediate member (30) detachably arranged between the first fixing unit (10) and the second fixing unit (20) and including a main body (33), a first radial end flange (31) and a second radial end flange (32),
- wherein the first fixing unit (10) comprises a first connecting member (11) having a first connecting body (11a) and a first fixing flange (11b) having a plurality of through-holes (11c), a first counter ring (12), a first clamping ring (13) and a first clamping device (14) for releasably clamping the first radial end flange (31), the first clamping device (14) comprising bolts (15) and elongated recesses (13a) for receiving the bolts,
- wherein the second fixing unit (20) comprises a second connecting member (21) comprising a connecting body (21a) and a second fixing flange (21b) having a plurality of through-holes (21c), a second counter ring (22), a second clamping ring (23) and a second clamping device (24) for releasably clamping the second radial end flange (32), the second clamping device (24) comprising bolts (15) and elongated recesses for receiving the bolts,
- wherein the first end flange (31) of the flexible intermediate member (30) is fluid-tightly clamped between the first fixing flange (11b) of the first connecting member (11) and the first counter-ring (12),
- wherein the second end flange (32) of the flexible intermediate member (30) is fluid-tightly clamped between the second fixing flange (21b) of the second connecting member (21) and the second counter-ring (22) and
- wherein the elongated recesses (13a) comprise ramps (13b) which are inclined towards a radial plane.

2. The compensator arrangement according to claim 1, wherein the bolts (15) comprise a head (15a).

3. The compensator arrangement according to one of the preceding claims, wherein the flexible intermediate member (30) is made of a flexible plastic material.

4. The compensator arrangement according to one of the preceding claims, wherein the bolts (15) are arranged on the first counter ring (12) and on the second counter ring (22).

5. The compensator arrangement according to one of the preceding claims, wherein the bolts (15) are threaded bolts (15c).

6. The compensator arrangement according to claim 1, wherein ramps (13b) are laterally arranged on the elongated recesses (13a).

7. The compensator arrangement according to one of the preceding claims, wherein the elongated recesses (13a) are arcuate or rectilinear.

8. The compensator arrangement according to one of the preceding claims, further comprising indicator means (4) for determining a predetermined end position of first and second fixing units (10, 20) in the assembled state.

9. The compensator arrangement according to one of the preceding claims, wherein the first connecting member (11) comprises a circumferential axial projection (5) projecting in the axial direction (X-X) on an inner side of the fixing flange (11b), wherein the flexible intermediate member (30) is clamped between the axial projection (5) and an inner edge (12b) of the first counter ring (12) in the mounted state.

10. The compensator arrangement according to one of the preceding claims, the first and/or second connecting body (11a, 21a) comprising a cylindrical cross-section or a polygonal, especially a square, cross-section.

## Revendications

1. Ensemble compensateur comprenant :
- une première unité de blocage (10),
- une deuxième unité de blocage (20), et
- un élément intermédiaire flexible (30) disposé de manière à pouvoir être démonté entre la première unité de blocage (10) et la deuxième unité de blocage (20), avec un corps principal (33), une première bride d'extrémité radiale (31) et une deuxième bride d'extrémité radiale (32),
- dans lequel la première unité de blocage (10) comprend un premier élément de raccordement (11) avec un premier corps de liaison (11a) et une première bride de blocage (11b) avec une pluralité d'ouvertures de passage (11c), une première contre-bague (12), une première bague de serrage (13) et un premier dispositif de serrage (14) pour serrer de manière amovible la première bride d'extrémité radiale (31), dans lequel le premier dispositif de serrage (14) comprend des boulons (15) et des évidements allongés (13a) pour loger les boulons,
- dans lequel la deuxième unité de blocage (20) comprend un deuxième élément de raccordement (21) avec un corps de liaison (21a) et une deuxième bride de blocage (21b) avec une pluralité d'ouvertures de passage (21c), une deuxième contre-bague (22), une deuxième bague de serrage (23) et un deuxième dispositif de serrage (24) pour serrer de manière amovible la deuxième bride d'extrémité radiale (32), dans lequel le deuxième dispositif de serrage (24) comprend des boulons (15) et des évidements allongés pour loger les boulons,
- dans lequel la première bride d'extrémité (31) de l'élément intermédiaire flexible (30) est serrée de manière étanche aux fluides entre la première bride de blocage (11b) du premier élément de raccordement (11) et la première contre-bague (12),
- dans lequel la deuxième bride d'extrémité (32) de l'élément intermédiaire flexible (30) est serrée de manière étanche aux fluides entre la deuxième bride de blocage (21b) du deuxième élément de raccordement (21) et la deuxième contre-bague (22), et
- dans lequel les évidements allongés (13a) présentent des rampes (13b), lesquelles sont inclinées vers un plan radial.

2. Ensemble compensateur selon la revendication 1, dans lequel les boulons (15) présentent une tête (15a).

3. Ensemble compensateur selon l'une quelconque des revendications précédentes, dans lequel l'élément intermédiaire flexible (30) est fabriqué à partir d'un matériau en plastique flexible.

4. Ensemble compensateur selon l'une quelconque des revendications précédentes, dans lequel les boulons (15) sont disposés sur la première contre-bague (12) et sur la deuxième contre-bague (22).

5. Ensemble compensateur selon l'une quelconque des revendications précédentes, dans lequel les boulons (15) sont des boulons de vissage avec un filetage (15c).

6. Ensemble compensateur selon la revendication 1, dans lequel les rampes (13b) sont disposées latéralement sur les évidements allongés (13a).

7. Ensemble compensateur selon l'une quelconque des revendications précédentes, dans lequel les évidements allongés (13a) sont en forme d'arc ou sont rectilignes.

8. Ensemble compensateur selon l'une quelconque des revendications précédentes, comprenant en outre un dispositif d'affichage (4) pour définir une position finale prédéfinie de la première et de la deuxième unité de blocage (10, 20) dans l'état monté.

9. Ensemble compensateur selon l'une quelconque des revendications précédentes, dans lequel le premier élément de raccordement (11) présente sur un côté intérieur de la bride de blocage (11b) une partie faisant saillie axiale (5) périphérique faisant saillie dans la direction axiale (X-X), dans lequel l'élément intermédiaire flexible (30) est serré dans l'état monté entre la partie faisant saillie axiale (5) et un bord intérieur (12b) de la première contre-bague (12).

10. Ensemble compensateur selon l'une quelconque des revendications précédentes, dans lequel le premier et/ou le deuxième corps de liaison (11a, 21a) présentent une section transversale cylindrique ou une section transversale polygonale, en particulier quadrangulaire.
